# EUROPEAN PATENT SPECIFICATION

(11) **EP 3 693 113 B1**
(45) Date of publication and mention of the grant of the patent: **17.11.2021**
(21) Application number: 20154710.6
(22) Date of filing: 30.01.2020
(51) Int. Cl.: B23B 39/20, B23B 41/00

(54) **MACHINE AND METHOD FOR MACHINING CONCAVE ELEMENTS**
MASCHINE UND VERFAHREN ZUR BEARBEITUNG VON KONKAVEN ELEMENTEN
MACHINE ET PROCÉDÉ D'USINAGE D'ÉLÉMENTS CONCAVES

(30) Priority: 05.02.2019 IT 201900001649
(43) Date of publication of application: 12.08.2020
(73) Proprietor: BB S.p.A., 59100 Prato (IT)
(72) Inventor: Bartoletti, Marco, 50041 Calenzano (IT)
(74) Representative: Firmati, Leonardo

(56) References cited:
- EP-A1- 2 995 402
- CN-A- 104 690 333
- DE-A1- 4 237 939

## Description

This invention relates to the field of machining concave elements in the form of a "C" or "U", which can be used, for example, in the fashion or clothing sector for decorative purposes or for the connection of necklaces or other objects.

In particular, the invention relates to a machine and method for machining concave elements, aimed at forming on them the seats for a spring-type pin which allows the closing and reopening.

These seats consist of a pair of holes formed on respective mutually facing surfaces of the concave element.

The holes are made on the concave element according to the prior art when it is in the form of a semi-worked element, before its bending, in such a way that the parts of the element do not obstruct the drills during the drilling.

Subsequently, the concave element is bent with a "C" or "U" shape so as to bring the holes to reciprocally facing surfaces.

Disadvantageously, this process makes it difficult to position the two holes facing each other with a coaxial orientation.

Alternatively, according to the prior art, the two holes are made on the element already bent in the form of a "C" or "U" by means of an inclined drill in such a way that the drill tip has access to the surface to be machined and avoids entering into contact with the opposite end.

Disadvantageously, the holes obtained by means of this process are inclined according to axes which are not parallel and coaxial with each other.

Both the methods described determine the creation of holes equipped with imprecise positioning and/or orientation.

Disadvantageously, this leads to an imprecise housing of the pin and undesired clearances and, consequently, a lower degree of quality of the end product.

Document EP 2 995 402 A1 discloses a machine for machining concave elements, of the type comprising a body extending along a concave line of extension in the form of a 'C' or 'U' and having a pair of mutually facing surfaces, the machine comprising:
- one or more supporting members;
- one or more drilling units configured to pierce the concave element at one of the mutually facing surfaces; each drilling unit comprising:
- a head;
- a tool connected to the head and extending along an axis of extension;
- a supporting body connected to the head for supporting the head and extending along a direction perpendicular to the axis of extension;
- second movement means configured for moving the head in a direction parallel to the axis of extension of the tool.

Document EP 2 995 402 A1 also discloses a method for machining concave elements, of the type comprising a body extending along a concave line of extension in the form of a 'C' or 'U' and having a pair of mutually facing surfaces and defining a space interposed between them, the method comprising the following steps:
- preparing a concave element;
- preparing a head of a first drilling unit which can engage the space, the first drilling unit having a tool connected to the respective head and extending along an axis of extension;
- moving the head in a direction parallel to the axis of extension of the respective tool, towards a first of the mutually facing surfaces for making a first hole, not passing through, on the first surface.

In this context, the technical purpose which forms the basis of the invention is to provide a machine and a method for machining concave elements which overcome at least some of the above-mentioned drawbacks of the prior art.

In particular, the aim of the invention is to provide a machine and a method for machining concave elements which is able to improve the precision in the location and orientation of the holes with respect to that which can be obtained with prior art machined and methods.

The technical purpose indicated and the aims specified are achieved by a machine and method for machining concave elements comprising the technical features described in respectively independent claims 1 and 9.

The dependent claims correspond to possible embodiments of the invention.

Further features and advantages of the invention are more apparent in the non-limiting description which follows of a preferred embodiment of a machine and method for machining concave elements.

The description is set out below with reference to the accompanying drawings which are provided solely for purposes of illustration without restricting the scope of the invention and in which:

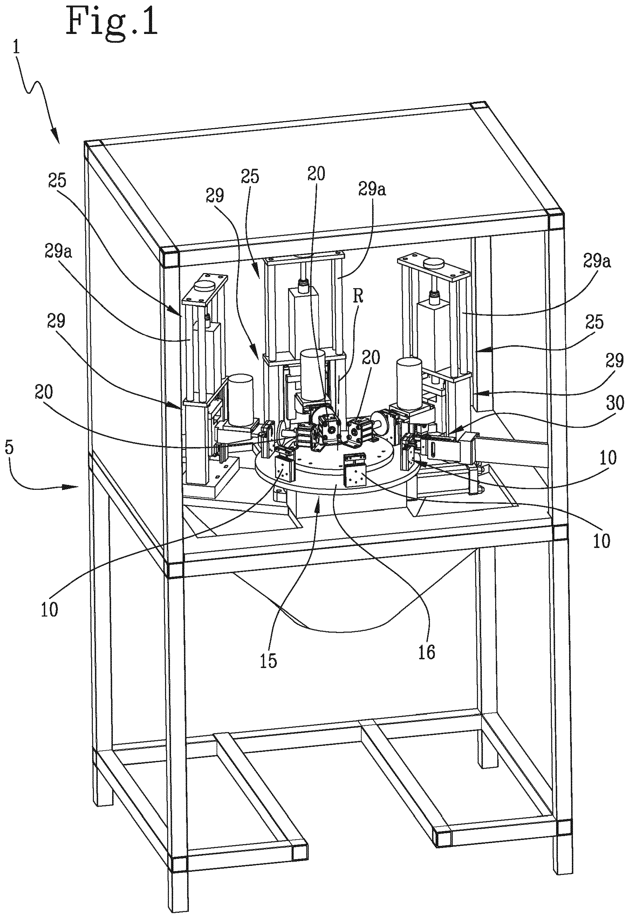

- Figure 1 is a perspective view of a machine for machining concave elements made according to the invention;
- Figure 2 is a top view of the machine of Figure 1;
- Figures 3A and 3B show different perspective views of a detail of the machine of Figure 1;
- Figure 4 is a detailed view a detail of the machine of Figure 1;

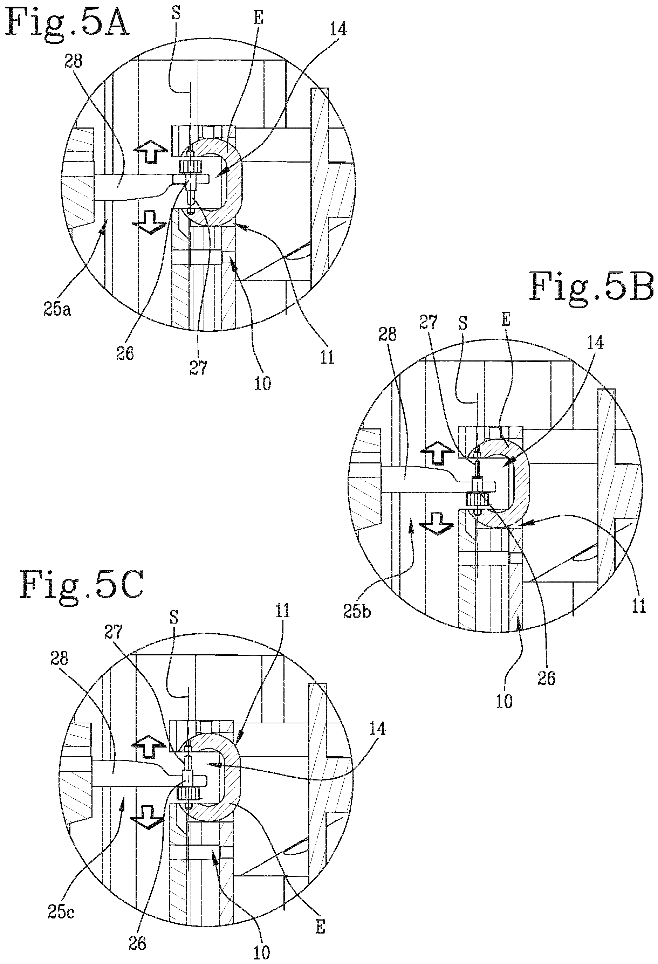

- Figures 5A, 5B and 5C show cross-section views of respective construction details of the machine of Figure 1;
- Figure 6 shows a perspective view of a concave element according to the invention;
- Figure 7 shows a cross-section view of the concave element of Figure 6.

A machine for machining concave elements according to the invention is illustrated in the accompanying drawings and is indicated generically with the reference numeral 1.

It will be referred to below as "machine 1".

The machine 1 is configured for machining concave elements "E", of the type comprising a body extending along a concave line of extension in the form of a "C" or "U" and having a pair of mutually facing surfaces "E1" and "E2", preferably flat and parallel.

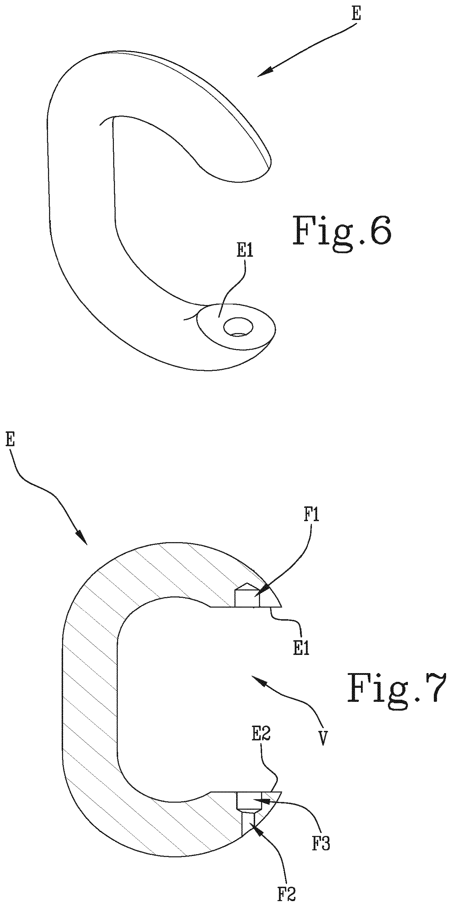

An example of the concave element "E" which can be machined using the machine 1 is illustrated in Figures 6 and 7.

The machine 1 comprises a base 5 having a supporting base which defines the orientation of the machine 1 in the operating configuration.

The machine 1 according to the invention comprises one or more supporting members 10 configured for supporting the concave elements "E".

In the embodiment illustrated, the machine 1 comprises six supporting members 10.

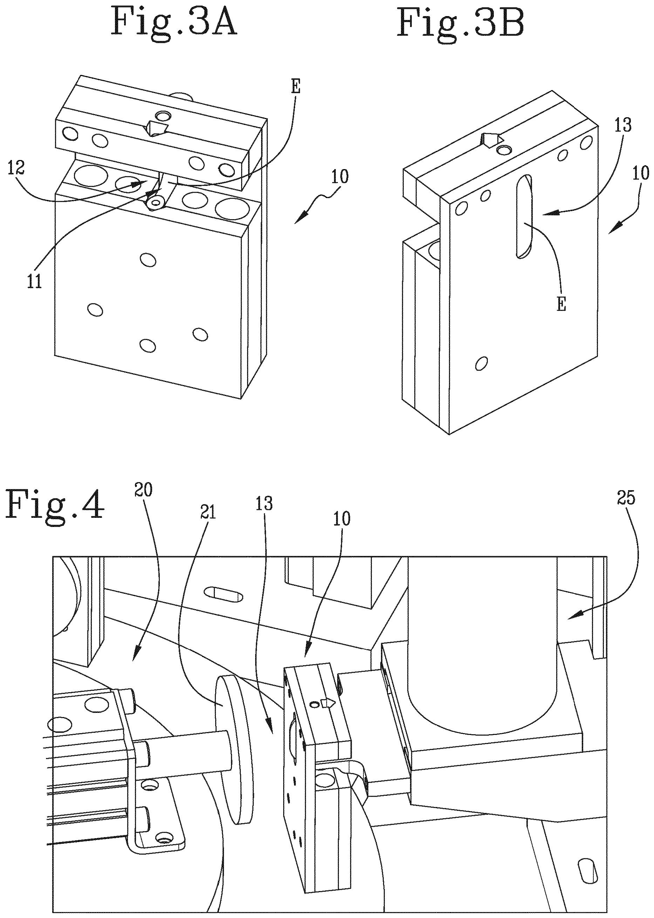

Each supporting member 10, shown in detail in Figures 3A and 3B, define a respective housing seat 11 for a concave element "E".

Preferably, the supporting member 10 and the housing seat 11 are configured and positioned in such a way as to orient the surfaces "E1" and "E2" horizontally in operating configuration.

Moreover, each supporting member 10 defines a front opening 12 at the housing seat 11.

The front opening 12 is configured to allow an access for machine tools to the pair of surfaces "E1" and "E2" of the concave element "E" housed in the housing seat 11.

Moreover, each supporting member 10 has a rear opening 13 opposite the front opening 12 and in communication with the housing seat 11 to allow a positioning and removal of a concave element "E".

Preferably, the housing seat 11 is configured to receive the concave element "E" through the rear opening 13 and stop it in a position facing the front opening 12.

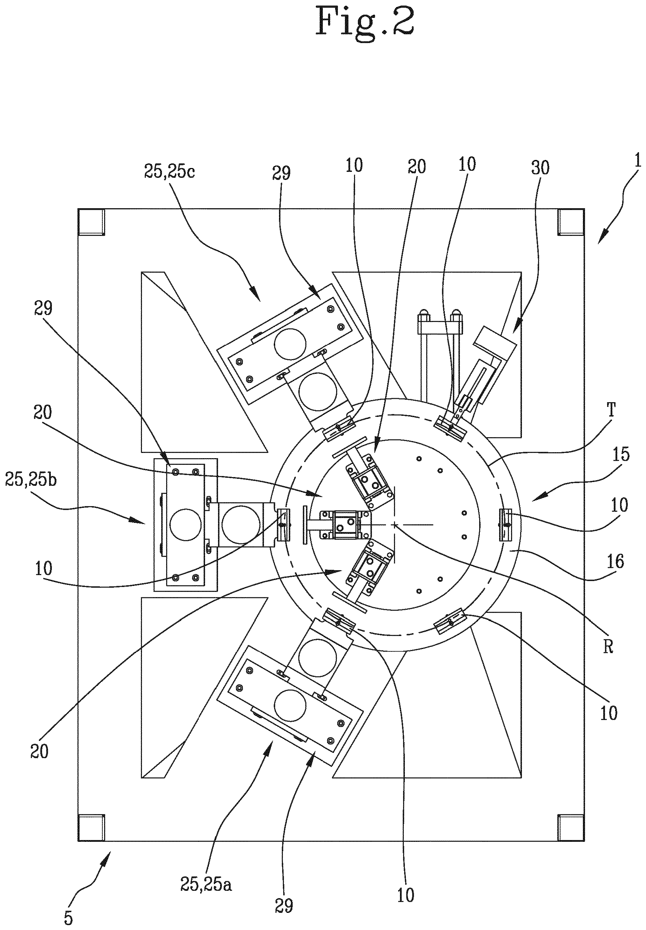

According to the invention, the machine 1 comprises first movement means 15 acting on the supporting members 10 for moving the supporting members 10 along a machining trajectory "T", illustrated in Figure 2. Preferably, the first movement means 15 and the housing seats 11 are reciprocally positioned and configured so as to keep the facing surfaces "E1" and "E2" parallel to a plane of the machining trajectory "T". Preferably, the machine 1 defines plurality of machining stations along the machining trajectory "T", in particular six machining stations, and the first movement means 15 are configured to move the supporting members 10 between them.

Preferably, the first movement means 15 comprise a plate 16 connected to said base 5 in a rotatable fashion about an axis of rotation "R" with respect to the base 5 itself.

Preferably, the plate 16 has an annular or disc-like shape.

The supporting members 10 are fixed to the plate 16 in an equidistant fashion with respect to the axis of rotation "R" so as to define the machining trajectory "T" with a circular shape and centred on the axis of rotation "R". The first movement means 15 also comprise an actuator configured for rotating the plate 16 about the axis of rotation "R".

Preferably, the machine 1 also comprises one or more stop elements 20, preferably three in number, mounted along the machining trajectory "T". Each stop element 20 comprises a stop portion 21 movable in a direction perpendicular to the machining trajectory "T" between a stop position and a disengaged position.

In the stop position, the stop element 20 presses against a rear portion of a concave element "E" positioned in a housing seat 11 so as to engage the rear opening 13 of a respective supporting member 10.

In other words, the stop element 20 in the stop position presses the concave element "E" towards the front opening 12 so as to stop the concave element "E" inside the respective housing seat 11 during the execution of the machining which will be subsequently carried out.

In the disengaged position, the stop element 20 moves away from the rear opening 13 so as to allow a movement of the supporting member 10 along the machining trajectory "T".

In the embodiment illustrated, the stop elements 20 are fixed and positioned at respective machining stations along the machining trajectory "T".

The machine 1 according to the invention also comprises one or more drilling units 25, each configured to pierce the concave element "E" at one of the two mutually facing surfaces "E1" and "E2".

Preferably, the machine 1 comprises three drilling units 25, each of which positioned at a respective machining station along the machining trajectory "T".

Each drilling unit 25 comprises a head 26 positioned along the machining trajectory "T" in such a way as to engage the housing seats 11 of the supporting members 10 during a movement of the later along a machining trajectory "T".

In particular, the head 26 is configured and positioned so as to engage the space "V" defined between the two facing surfaces "E1" and "E2" of a concave element "E" moved along the machining trajectory "T".

Each drilling unit 25 also comprises a tool 27 connected to the head 26 and extending along an axis of extension "S" substantially perpendicular to the machining trajectory "T".

The tool 27 is rotatable about the axis of extension "S" and has shape and hardness characteristics suitable to form a hole in a metallic material.

Each drilling unit 25 also comprises a supporting body 28 connected to the head 26 so as to support it in the position described above.

The supporting body 28 extends along a direction substantially perpendicular to the axis of extension "S", so as not to enter into contact with the supporting members 10 or with the concave elements "E" housed in the housing seats 11 during a movement of the latter along the machining trajectory "T".

Similarly, the supporting members 10 have a slot 14 extending parallel to the machining trajectory "T" and configured to allow a reciprocal movement between the heads 26 and the supporting members 10 during the movement of the supporting members 10 along the machining trajectory "T", avoiding contact between the heads 26 and the supporting members 10. Each drilling unit 25 also comprises second movement means 29 configured for moving the head (26) in a direction parallel to the axis of extension "S" of the tool 27.

In other words, the second movement means 29 are configured for moving the head 26 in a direction perpendicular to the machining trajectory "T". Preferably, the second movement means 29 comprise one or more guides 29a fixed to the base 5 and oriented perpendicularly to the machining trajectory "T" and a respective slide sliding on the guides 29a.

The supporting body 28 is connected to the slide for moving the head 26, the tool 27 and the supporting body 28 parallel to the axis of extension "S".

The three drilling units 25 comprise a first drilling unit 25a, a second drilling unit 25b and a third drilling unit 25c, each of which configured as described above and positioned at a respective machining station.

More specifically, the first drilling unit 25a is configured and/or positioned to form a first hole "F1", not passing through, on a first of the facing surfaces "E1" of a concave element "E" housed in one of the respective housing seats 11.

The second drilling unit 25b is configured and/or positioned to form a second hole "F2", passing through, on a second of the facing surfaces "E2" of the concave element "E" housed in the housing seat 11.

The second hole "F2" is substantially coaxial with the first hole "F1".

The third drilling unit 25c configured and/or positioned to form a spot facing "F3" of the second hole "F2" located in a position facing the first hole "F1".

The second and third drilling units 25b and 25c have respective tool 27 and head 26 facing in opposite directions with respect to the tool 27 and the head 26 of the first drilling unit 25a.

Moreover, the tool 27 of the third drilling unit 25c has a diameter equal to the diameter of the tool 27 of the first drilling unit 25a and greater than the diameter of the tool 27 of the second drilling unit 25b, so that the spot facing "F3" has a diameter equal to the first hole "F1" and the second hole "F2" has a diameter less than both.

The first and the second holes "F1" and "F2" and the spot facing "F3" can be executed in any order, consequently the reciprocal positioning of the first, second and third drilling units 25a, 25b and 25c in the respective machining stations along the machining trajectory "T" is not significant.

Preferably, the machine 1 defines a loading station positioned along the machining trajectory "T" and also comprises a chute, not illustrated, which has an end portion located at the loading station.

The chute is configured to engage the rear opening 13 of a supporting member 10 movable along the machining trajectory "T" and positioned at the loading station.

More specifically, the chute is configured for guiding the falling of a concave element "E" through the rear opening 13 in the housing seat 11 of a supporting member 10 positioned in the loading station, so that the pair of reciprocally facing surfaces "E1" and "E2" faces towards the front opening 12.

Preferably, the machine 1 also comprises measurement means 30 positioned along the machining trajectory "T" at one of the above-mentioned machining stations downstream of the drilling units 25.

The measuring means 30 are configured for engaging the housing seats 11 in such a way as to measure one or more dimensions of the first and second hole "F1" and "F2" and of the spot facing "F3" of each concave element "E" housed in the housing seats 11.

The measurement means 30 are, for example, configured for measuring diameter and depth of the holes in order to determine the conformity with predetermined production standards.

The machine 1 also comprises an unloading unit, not illustrated, mounted along the machining trajectory "T" at an unloading station preferably positioned downstream of the measurement means 30.

The unloading element is configured to engage the housing seat 11 of a respective supporting member 10 positioned in the unloading station for automatically removing a concave element "E" from its housing seat 11. Another object of the invention a method for machining concave elements "E", of the type described above, which can be implemented by means of the machine 1 described above.

The method comprises a first step di preparing a concave element "E", preferably comprising the step of moving the concave element "E" towards one of the housing seats 11 of the machine 1 by means of the chute described above.

Subsequently, the method comprises a step of moving the concave element "E" according to a machining trajectory "T" preferably perpendicular to the "C" or "U" line of extension of the concave element "E" and preferably similar to that described with reference to the machine 1.

The step of moving the concave element "E" is executed in such a way that a head 26 of a first drilling unit 25a, positioned along the machining trajectory "T" and preferably similar to that described with reference to the machine 1, engages the space "V" defined between the reciprocally facing surfaces "E1" and "E2" of the concave element "E".

During this step, the head 26 is preferably kept immobile along the movement trajectory "T" until engaging the space "V".

The head 26 has a tool 27 extending along an axis of extension "S" perpendicular to the machining trajectory "T".

The movement of the concave element "E" along the machining trajectory "T" is stopped when the head 26 engages the space "V".

Preferably, the step for moving the concave element "E" is performed by means of the first movement means 15 described above.

Subsequently, the method comprises a step of moving the head 26 of the first drilling unit 25a along a direction parallel to the axis of extension "S" of the respective tool 27 towards a first of the reciprocally facing surfaces "E1" and such that the tool 27 engages the first surface "E1" and executes a first hole "F1" in the concave element "E".

The first hole "F1" is not a through hole.

Preferably, the facing surfaces "E1" and "E2" are flat and parallel and are kept oriented perpendicularly to the axis of extension "S" of the tool 27.

Preferably, the step for moving the head 26 is performed by means of the second movement means 29 described above.

Subsequently, the method comprises continuing the movement of the concave element "E" along the trajectory "T" in such a way that a head 26 of a second drilling unit 25b positioned along the machining trajectory "T" and preferably similar to that described with reference to the machine 1 engages the space "V".

The second drilling unit 25b has a head 26 and a tool 27 oriented in opposite directions with respect to the first drilling unit 25a.

Subsequently, the method comprises a step of moving the head 26 of the second drilling unit 25b towards the second surface "E2" in a similar manner to the previous movement of the head 26 of the first drilling unit 25a so as to make a second through hole "F2" in the concave element "E" at the second surface "E2". Preferably, the second hole "F2" has a diameter less than that of the first hole "F1".

Subsequently, the method comprises repeating the previous steps using the third drilling unit 25c so as to execute the spot facing "F3" of the second hole "F2", positioned at the second surface "E2", facing towards the first hole "F1" and preferably equipped with the same diameter as the first hole "F1".

The order of presentation of the steps necessary for forming the first and second holes F1" and "F2" and the spot facing "F3" can be varied and their formation can be executed in any order.

Subsequently, the method preferably a step of measuring the diameter and/or the depth of the first and second hole "F1" e "F2" and of the spot facing "F3" and comparing that measurement with predetermined standard values so as to check the quality of the concave element "E", preferably using the measurement means 30 described above.

The invention achieves the set aim by overcoming the drawbacks of the prior art.

Advantageously, the machine and the method described allow the holes described to be executed precisely even though their position and the shape of the concave element obstruct their execution.

## Claims

1. A machine (1) for machining concave elements (E), of the type comprising a body extending along a concave line of extension in the form of a 'C' or 'U' and having a pair of mutually facing surfaces (E1, E2),
the machine (1) comprising:
- one or more supporting members (10), each forming a respective housing seat (11) for a concave element (E);
- first movement means (15) acting on the supporting members (10) for moving the supporting members (10) along a machining trajectory (T);
- one or more drilling units (25) configured to pierce the concave element (E) at one of the mutually facing surfaces (E1, E2);
each drilling unit (25) comprising:
- a head (26) positioned along the machining trajectory (T) in such a way as to engage the housing seats (11) during a movement of the supporting members (10);
- a tool (27) connected to the head (26) and extending along an axis of extension (S) substantially perpendicular to the machining trajectory (T);
- a supporting body (28) connected to the head (26) for supporting the head (26) and extending along a direction perpendicular to the axis of extension (S);
- second movement means (29) configured for moving the head (26) in a direction parallel to the axis of extension (S) of the tool (27).

2. The machine (1) according to claim 1, wherein the one or more drilling units (25) comprise:
- a first drilling unit (25, 25a) configured and/or positioned to form a first hole (F1), not passing through, at a first of the facing surfaces (E1) of a concave element (E) housed in one of the respective housing seats (11);
- a second drilling unit (25, 25b) configured and/or positioned to form a second hole (F2), passing through, on a second of the facing surfaces (E2) of the concave element (E) in a direction substantially coaxial with the first hole (F1);
- a third drilling unit (25, 25c) configured and/or positioned to form a spot facing (F3) of the second hole (F2) located in a position facing the first hole (F1).

3. The machine (1) according to claim 1 or 2, comprising a base (5), the second movement means (29) comprising one or more guides (29a) fixed to the base (5) and oriented perpendicularly to the machining trajectory (T) and a respective slide sliding on the guides (29a), the supporting body (28) being connected to the slide for moving the head (26), the tool (27) and the supporting body (28) parallel to the axis of extension (S) of the tool (27).

4. The machine (1) according to any one of the preceding claims, comprising a base (5), the first movement means (15) comprising a plate (16), preferably annular or disc-shaped, connected to the base (5), the plate (16) being rotatable relative to the base (5) about an axis of rotation (R) to define the machining trajectory (T), the supporting members (10) being fixed to the plate (16) in such a way to be equidistant relative to the axis of rotation (R).

5. The machine (1) according to any one of the preceding claims, comprising measuring means (30) arranged along the machining trajectory (T) and configured for engaging the housing seats (11) in such a way as to measure respective holes (F1, F2, F3) on the pair of mutually facing surfaces (E1, E2) of each concave element (E) housed in the housing seats (11).

6. The machine (1) according to any one of the preceding claims, wherein each supporting member (10) defines a front opening (12) at the housing seat (11) configured to allow access to the pair of mutually facing surfaces (E1, E2) of a concave element (E) housed in the housing seat (11), each supporting member (10) having a rear opening (13) opposite the front opening (12) and in communication with the housing seat (11) to allow a positioning and a removal of the concave elements (E) in the housing seat (11), the machine (1) comprising a chute having an end portion positioned along the machining trajectory (T) in such a way as to engage the rear opening (13) of a supporting member (10) positioned along the machining trajectory (T), the chute being configured for guiding a drop of a concave element (E) through the rear opening (13) towards the housing seat (11) in such a way that the pair of mutually facing surfaces (E1, E2) is facing towards the front opening (12).

7. The machine (1) according to claim 6, comprising an unloading element mounted along the machining trajectory (T) and configured to engage the housing seat (11) of a respective supporting member (10) for removing a respective concave element (E) from the housing seat (11).

8. The machine (1) according to claim 6 or 7, comprising one or more stop elements (20) mounted along the machining trajectory (T), each stop element (20) comprising a stop portion (21) movable in a direction perpendicular to the machining trajectory (T) between a stop position wherein the stop element (20) acts in pressure against a portion of a concave element (E) which engages the rear opening (13) of a respective supporting member (10) and a disengaged position wherein the stop element (20) allows a movement of the supporting member (10) along the machining trajectory (T).

9. A method for machining concave elements (E), of the type comprising a body extending along a concave line of extension in the form of a 'C' or 'U' and having a pair of mutually facing surfaces (E1, E2) and defining a space (V) interposed between them, the method comprising the steps of:
- preparing a concave element (E);
- moving the concave element (E) according to a machining trajectory (T) in such a way that a head (26) of a first drilling unit (25, 25a) positioned along the machining trajectory (T) engages the space (V), the first drilling unit (25, 25a) having a tool (27) connected to the respective head (26) and extending along an axis of extension (S) perpendicular to the machining trajectory (T);
- moving the head (26) in a direction parallel to the axis of extension (S) of the respective tool (27), towards a first of the mutually facing surfaces (E1) for making a first hole (F1), not passing through, on the first surface (E1).

10. The method according to claim 9, comprising the further steps of:
- moving the concave element (E) according to a machining trajectory (T) in such a way that a head (26) of a second drilling unit (25, 25b) positioned along the machining trajectory (T) engages the space (V), the second drilling unit (25, 25b) having a tool (27) connected to the respective head (26) and extending along an axis of extension (S) perpendicular to the machining trajectory (T) and facing the opposite direction to the tool (27) of the first drilling unit (25, 25a);
- moving the head (26) of the second drilling unit (25, 25b) in a direction parallel to the axis of extension (S) of the respective tool (27) towards the second of the surfaces facing each other (E2) for making a second hole (F2), passing through, on the second surface (E2).

11. The method according to claim 10, comprising the further steps of:
- moving the concave element (E) according to the machining trajectory (T) in such a way that a head (26) of a third drilling unit (25, 25c) positioned along the machining trajectory (T) engages the space (V), the third drilling unit (25, 25c) having a tool (27) connected to the respective head (26) extending along an axis of extension (S) perpendicular to the machining trajectory (T), having a diameter greater than a diameter of the tool (27) of the second drilling unit (25, 25b) and facing in an opposite direction relative to the tool (27) of the first drilling unit (25, 25a);
- moving the head (26) of the third drilling unit (25, 25c) in a direction parallel to the axis of extension (S) of the respective tool (27) towards the second surface (E2) for making a spot facing (F3) of the second hole (F2) facing the first hole (F1).

12. The method according to any one of claims 9 to 11, wherein the machining trajectory (T) is perpendicular to a plane in which the line of extension of the concave element (E) lies, the machining trajectory (T) being preferably circular.

## Patentansprüche

1. Maschine (1) zur Bearbeitung von konkaven Elementen (E) des Typs, der einen Körper umfasst, der sich entlang einer konkaven Erstreckungslinie in Form eines ,C' oder ,U' erstreckt und ein Paar einander zugewandter Oberflächen (E1, E2) aufweist, wobei die Maschine (1) umfasst:
- ein oder mehrere Stützelemente (10), die jeweils einen entsprechenden Gehäusesitz (11) für ein konkaves Element (E) bilden;
- erste Bewegungsmittel (15), die auf die Stützelemente (10) wirken, um die Stützelemente (10) entlang einer Bearbeitungsflugbahn (T) zu bewegen;
- eine oder mehrere Bohreinheiten (25), die ausgelegt sind, um das konkave Element (E) an einer der einander zugewandten Oberflächen (E1, E2) zu durchbohren;
wobei eine jede Bohreinheit (25) umfasst:
- einen Kopf (26), der entlang der Bearbeitungsflugbahn (T) so positioniert ist, dass er während einer Bewegung der Stützelemente (10) in die Gehäusesitze (11) eingreift;
- ein Werkzeug (27), das mit dem Kopf (26) verbunden ist und sich entlang einer Erstreckungsachse (S) im Wesentlichen senkrecht zur Bearbeitungsflugbahn (T) erstreckt;
- einen Stützkörper (28), der mit dem Kopf (26) zum Stützen des Kopfes (26) verbunden ist und sich entlang einer Richtung senkrecht zur Erstreckungsachse (S) erstreckt;
- zweite Bewegungsmittel (29), die zum Bewegen des Kopfes (26) in einer Richtung parallel zur Erstreckungsachse (S) des Werkzeugs (27) ausgelegt sind.

2. Maschine (1) nach Anspruch 1, wobei die eine oder mehrere Bohreinheiten (25) umfassen:
- eine erste Bohreinheit (25, 25a), die so ausgelegt und/oder positioniert ist, dass sie ein erstes Loch (F1), das kein Durchgangsloch ist, an einer ersten der zugewandten Oberflächen (E1) eines konkaven Elements (E), das in einem der jeweiligen Gehäusesitze (11) untergebracht ist, bildet;
- eine zweite Bohreinheit (25, 25b), die so ausgelegt und/oder positioniert ist, dass sie ein zweites Loch (F2), das ein Durchgangsloch ist, an einer zweiten der zugewandten Oberflächen (E2) des konkaven Elements (E) in einer Richtung im Wesentlichen koaxial zum ersten Loch (F1) bildet;
- eine dritte Bohreinheit (25, 25c), die so ausgelegt und/oder positioniert ist, dass sie eine Ansenkung (F3) des zweiten Lochs (F2) bildet, die sich in einer Position befindet, die dem ersten Loch (F1) zugewandt ist.

3. Maschine (1) nach Anspruch 1 oder 2, umfassend eine Basis (5), wobei die zweiten Bewegungsmittel (29) eine oder mehrere Führungen (29a), die an der Basis (5) befestigt und senkrecht zur Bearbeitungsflugbahn (T) orientiert sind und einen jeweiligen auf den Führungen (29a) gleitenden Schlitten umfassen, wobei der Stützkörper (28) mit dem Schlitten verbunden ist, um den Kopf (26), das Werkzeug (27) und den Stützkörper (28) parallel zur Erstreckungsachse (S) des Werkzeugs (27) zu bewegen.

4. Maschine (1) nach einem der vorhergehenden Ansprüche, umfassend eine Basis (5), wobei die ersten Bewegungsmittel (15) eine Platte (16), vorzugsweise ring- oder scheibenförmig, umfassen, die mit der Basis (5) verbunden ist, wobei die Platte (16) relativ zur Basis (5) um eine Drehachse (R) drehbar ist, um die Bearbeitungsflugbahn (T) zu definieren, wobei die Stützelemente (10) an der Platte (16) befestigt sind, so dass sie äquidistant zur Drehachse (R) verlaufen.

5. Maschine (1) nach einem der vorhergehenden Ansprüche, umfassend Messmittel (30), die entlang der Bearbeitungsflugbahn (T) angeordnet und ausgelegt sind, um die Gehäusesitze (11) so einzugreifen, dass jeweilige Löcher (F1, F2, F3) an dem Paar einander zugewandter Oberflächen (E1, E2) eines jeden konkaven Elements (E), das in den Gehäusesitzen (11) untergebracht ist, gemessen werden.

6. Maschine (1) nach einem der vorhergehenden Ansprüche, wobei ein jedes Stützelement (10) eine vordere Öffnung (12) am Gehäusesitz (11) definiert, die ausgelegt ist, um zu dem Paar einander zugewandter Oberflächen (E1, E2) eines konkaven Elements (E), das in dem Gehäusesitz (11) untergebracht ist, Zugang zu ermöglichen, wobei ein jedes Stützelement (10) eine hintere Öffnung (13) gegenüber der vorderen Öffnung (12) aufweist und mit dem Gehäusesitz (11) in Verbindung steht, um eine Positionierung und Entfernung der konkaven Elemente (E) in dem Gehäusesitz (11) zu ermöglichen, wobei die Maschine (1) eine Rutsche mit einem Endabschnitt aufweist, der entlang der Bearbeitungsflugbahn (T) so positioniert ist, dass er in die hintere Öffnung (13) eines entlang der Bearbeitungsflugbahn (T) positionierten Stützelements (10) eingreift, wobei die Rutsche zum Führen eines Falls eines konkaven Elements (E) durch die hintere Öffnung (13) in Richtung des Gehäusesitzes (11) ausgelegt ist, so dass das Paar einander zugewandter Oberflächen (E1, E2) zur vorderen Öffnung (12) hin zugewandt ist.

7. Maschine (1) nach Anspruch 6, umfassend ein Entladeelement, das entlang der Bearbeitungsflugbahn (T) montiert ist und ausgelegt ist, um mit dem Gehäusesitz (11) eines jeweiligen Stützelements (10) einzugreifen, um ein jeweiliges konkaves Element (E) aus dem Gehäusesitz (11) zu entfernen.

8. Maschine (1) nach Anspruch 6 oder 7, umfassend ein oder mehrere Anschlagelemente (20), die entlang der Bearbeitungsflugbahn (T) angebracht sind, wobei ein jedes Anschlagelement (20) einen Anschlagabschnitt (21) umfasst, der in einer Richtung senkrecht zu der Bearbeitungsflugbahn (T) zwischen einer Anschlagposition, in der das Anschlagelement (20) unter Druck gegen einen Abschnitt eines konkaven Elements (E) wirkt, das in die hintere Öffnung (13) eines jeweiligen Stützelements (10) eingreift, und einer ausgerückten Position, in der das Anschlagelement (20) eine Bewegung des Stützelements (10) entlang der Bearbeitungsflugbahn (T) ermöglicht, bewegbar ist.

9. Verfahren zur Bearbeitung von konkaven Elementen (E) des Typs, der einen Körper umfasst, der sich entlang einer konkaven Erstreckungslinie in Form eines ,C' oder ,U' erstreckt und ein Paar einander zugewandter Oberflächen (E1, E2) aufweist und einen dazwischen angeordneten Raum (V) definiert, wobei das Verfahren die Schritte umfasst:
- Vorbereiten eines konkaven Elements (E);
- Bewegen des konkaven Elements (E) gemäß einer Bearbeitungsflugbahn (T), so dass ein entlang der Bearbeitungsflugbahn (T) positionierter Kopf (26) einer ersten Bohreinheit (25, 25a) in den Raum (V) eingreift, wobei die erste Bohreinheit (25, 25a) ein Werkzeug (27) aufweist, das mit dem jeweiligen Kopf (26) verbunden ist und sich entlang einer Erstreckungsachse (S) senkrecht zur Bearbeitungsflugbahn (T) erstreckt;
- Bewegen des Kopfes (26) in einer Richtung parallel zur Erstreckungsachse (S) des jeweiligen Werkzeugs (27) zu einer ersten der einander zugewandten Oberflächen (E1) zum Bilden eines ersten Lochs (F1), das kein Durchgangsloch ist, auf der ersten Oberfläche (E1).

10. Verfahren nach Anspruch 9, umfassend die weiteren Schritte:
- Bewegen des konkaven Elements (E) gemäß einer Bearbeitungsflugbahn (T), so dass ein entlang der Bearbeitungsflugbahn (T) positionierter Kopf (26) einer zweiten Bohreinheit (25, 25b) in den Raum (V) eingreift, wobei die zweite Bohreinheit (25, 25b) ein Werkzeug (27) aufweist, das mit dem jeweiligen Kopf (26) verbunden ist und sich entlang einer Erstreckungsachse (S) senkrecht zur Bearbeitungsflugbahn (T) erstreckt und der zu dem Werkzeug (27) der ersten Bohreinheit (25, 25a) entgegengesetzten Richtung zugewandt ist;
- Bewegen des Kopfes (26) der zweiten Bohreinheit (25, 25b) in einer Richtung parallel zur Erstreckungsachse (S) des jeweiligen Werkzeugs (27) zur zweiten der einander zugewandten Oberflächen (E2) zum Bilden eines zweiten Lochs (F2), das ein Durchgangsloch ist, auf der zweiten Oberfläche (E2).

11. Verfahren nach Anspruch 10, umfassend die weiteren Schritte:
- Bewegen des konkaven Elements (E) gemäß einer Bearbeitungsflugbahn (T), so dass ein entlang der Bearbeitungsflugbahn (T) positionierter Kopf (26) einer dritten Bohreinheit (25, 25c) in den Raum (V) eingreift, wobei die dritte Bohreinheit (25, 25c) ein Werkzeug (27) aufweist, das mit dem jeweiligen Kopf (26) verbunden ist und sich entlang einer Erstreckungsachse (S) senkrecht zur Bearbeitungsflugbahn (T) erstreckt, einen Durchmesser größer als ein Durchmesser des Werkzeugs (27) der zweiten Bohreinheit (25, 25b) aufweist und relativ zum Werkzeug (27) der ersten Bohreinheit (25, 25a) in einer entgegengesetzten Richtung zugewandt ist;
- Bewegen des Kopfes (26) der dritten Bohreinheit (25, 25c) in einer Richtung parallel zur Erstreckungsachse (S) des jeweiligen Werkzeugs (27) zur zweiten Oberfläche (E2) zum Bilden einer Ansenkung (F3) des zweiten Lochs (F2), die dem ersten Loch (F1) zugewandt ist.

12. Verfahren nach einem der Ansprüche 9 bis 11, wobei die Bearbeitungsflugbahn (T) senkrecht zu einer Ebene verläuft, in der die Erstreckungslinie des konkaven Elements (E) liegt, wobei die Bearbeitungsflugbahn (T) vorzugsweise kreisförmig ist.

## Revendications

1. Machine (1) d'usinage d'éléments concaves (E), du type comprenant un corps se prolongeant le long d'une ligne d'extension concave sous la forme d'un « C » ou d'un « U » et comportant une paire de surfaces (E1, E2) se faisant face mutuellement,
la machine (1) comprenant :
- un ou plusieurs éléments de support (10), chacun formant un siège de logement (11) respectif pour un élément concave (E) ;
- des premiers moyens de déplacement (15), agissant sur les éléments de support (10), servant à déplacer les éléments de support (10) le long d'une trajectoire d'usinage (T) ;
- une ou plusieurs unités de perçage (25) configurées pour percer l'élément concave (E) en correspondance de l'une des surfaces (E1, E2) se faisant face mutuellement ;
chaque unité de perçage (25) comprenant :
- une tête (26) positionnée le long de la trajectoire d'usinage (T) de manière à mettre en prise les sièges de logement (11) pendant un mouvement des éléments de support (10) ;
- un outil (27) relié à la tête (26) et se prolongeant le long d'un axe d'extension (S) substantiellement perpendiculaire à la trajectoire d'usinage (T) ;
- un corps de support (28) relié à la tête (26) servant à supporter la tête (26) et se prolongeant le long d'une direction perpendiculaire à l'axe d'extension (S) ;
- des seconds moyens de déplacement (29) configurés pour déplacer la tête (26) dans une direction parallèle à l'axe d'extension (S) de l'outil (27).

2. Machine (1) selon la revendication 1, dans laquelle l'une ou plusieurs unités de perçage (25) comprennent :
- une première unité de perçage (25, 25a) configurée et/ou positionnée pour former un premier trou (F1), non traversant, en correspondance d'une première des surfaces (E1) se faisant face d'un élément concave (E) logé dans l'un des sièges de logement (11) respectifs ;
- une deuxième unité de perçage (25, 25b) configurée et/ou positionnée pour former un deuxième trou (F2), traversant, sur une deuxième des surfaces (E2) se faisant face de l'élément concave (E) dans une direction substantiellement coaxiale au premier trou (F1) ;
- une troisième unité de perçage (25, 25c) configurée et/ou positionnée pour former un lamage (F3) du deuxième trou (F2) situé dans une position faisant face au premier trou (F1).

3. Machine (1) selon la revendication 1 ou 2, comprenant une base (5), les seconds moyens de déplacement (29) comprenant un ou plusieurs guides (29a) fixés à la base (5) et orientés perpendiculairement à la trajectoire d'usinage (T) et un coulisseau respectif coulissant sur les guides (29a), le corps de support (28) étant relié au coulisseau pour déplacer la tête (26), l'outil (27) et le corps de support (28) parallèlement à l'axe d'extension (S) de l'outil (27).

4. Machine (1) selon l'une quelconque des revendications précédentes, comprenant une base (5), les premiers moyens de déplacement (15) comprenant une plaque (16), de préférence annulaire ou discoïdale, reliée à la base (5), la plaque (16) étant mobile en rotation par rapport à la base (5) autour d'un axe de rotation (R) pour définir la trajectoire d'usinage (T), les organes de support (10) étant fixés à la plaque (16) de manière à être équidistants par rapport à l'axe de rotation (R).

5. Machine (1) selon l'une quelconque des revendications précédentes, comprenant des moyens de mesure (30) disposés le long de la trajectoire d'usinage (T) et configurés pour se mettre en prise avec les sièges de logement (11) de manière à mesurer les trous (F1, F2, F3) respectifs sur la paire de surfaces (E1, E2) se faisant face mutuellement de chaque élément concave (E) logé dans les sièges de logement (11).

6. Machine (1) selon l'une quelconque des revendications précédentes, dans laquelle chaque élément de support (10) définit une ouverture avant (12) en correspondance du siège de logement (11) configurée pour permettre l'accès à la paire de surfaces (E1, E2) se faisant face mutuellement d'un élément concave (E) logé dans le siège de logement (11), chaque élément de support (10) comportant une ouverture arrière (13) opposée à l'ouverture avant (12) et en communication avec le siège de logement (11) pour permettre un positionnement et un retrait des éléments concaves (E) dans le siège de logement (11), la machine (1) comprenant une goulotte comportant une partie d'extrémité positionnée le long de la trajectoire d'usinage (T) de manière à mettre en prise l'ouverture arrière (13) d'un élément de support (10) positionné le long de la trajectoire d'usinage (T), la goulotte étant configurée pour guider une chute d'un élément concave (E) à travers l'ouverture arrière (13) vers le siège de logement (11) de manière à ce que la paire de surfaces (E1, E2) se faisant face mutuellement soit tournée vers l'ouverture avant (12) .

7. Machine (1) selon la revendication 6, comprenant un élément de déchargement monté le long de la trajectoire d'usinage (T) et configuré pour se mettre en prise avec le siège de logement (11) d'un élément de support (10) respectif pour retirer un élément concave (E) respectif du siège de logement (11) .

8. Machine (1) selon la revendication 6 ou 7, comprenant un ou plusieurs éléments d'arrêt (20) montés le long de la trajectoire d'usinage (T), chaque élément d'arrêt (20) comprenant une partie d'arrêt (21) mobile dans une direction perpendiculaire à la trajectoire d'usinage (T) entre une position d'arrêt dans laquelle l'élément d'arrêt (20) agit en pression contre une partie d'un élément concave (E) qui se met en prise avec l'ouverture arrière (13) d'un élément de support (10) respectif et une position désengagée dans laquelle l'élément d'arrêt (20) permet un mouvement de l'élément de support (10) le long de la trajectoire d'usinage (T) .

9. Procédé d'usinage d'éléments concaves (E), du type comprenant un corps se prolongeant le long d'une ligne d'extension concave sous la forme d'un « C » ou d'un « U » et comportant une paire de surfaces (E1, E2) se faisant face mutuellement et définissant un espace (V) interposé entre elles, le procédé comprenant les étapes de :
- préparer un élément concave (E) ;
- déplacer l'élément concave (E) selon une trajectoire d'usinage (T) de telle manière qu'une tête (26) d'une première unité de perçage (25, 25a) positionnée le long de la trajectoire d'usinage (T) se met en prise dans l'espace (V), la première unité de perçage (25, 25a) comportant un outil (27) relié à la tête (26) respective et se prolongeant le long d'un axe d'extension (S) perpendiculaire à la trajectoire d'usinage (T) ;
- déplacer la tête (26) dans une direction parallèle à l'axe d'extension (S) de l'outil (27) respectif, vers une première des surfaces (E1) se faisant face mutuellement pour réaliser un premier trou (F1), non traversant, sur la première surface (E1).

10. Procédé selon la revendication 9, comprenant les étapes supplémentaires de :
- déplacer l'élément concave (E) selon une trajectoire d'usinage (T) de telle sorte qu'une tête (26) d'une deuxième unité de perçage (25, 25b) positionnée le long de la trajectoire d'usinage (T) se met en prise dans l'espace (V), la deuxième unité de perçage (25, 25b) comportant un outil (27) relié à la tête (26) respective et se prolongeant le long d'un axe d'extension (S) perpendiculaire à la trajectoire d'usinage (T) et faisant face à la direction opposée à l'outil (27) de la première unité de perçage (25, 25a) ;
- déplacer la tête (26) de la seconde unité de perçage (25, 25b) dans une direction parallèle à l'axe d'extension (S) de l'outil (27) respectif vers la seconde des surfaces (E2) se faisant face pour réaliser un second trou (F2), traversant, sur la seconde surface (E2).

11. Procédé selon la revendication 10, comprenant les étapes supplémentaires de :
- déplacer l'élément concave (E) selon la trajectoire d'usinage (T) de telle sorte qu'une tête (26) d'une troisième unité de perçage (25, 25c) positionnée le long de la trajectoire d'usinage (T) se met en prise dans l'espace (V), la troisième unité de perçage (25, 25c) comportant un outil (27) relié à la tête (26) respective se prolongeant le long d'un axe d'extension (S) perpendiculaire à la trajectoire d'usinage (T), ayant un diamètre plus grand qu'un diamètre de l'outil (27) de la deuxième unité de perçage (25, 25b) et orienté dans une direction opposée par rapport à l'outil (27) de la première unité de perçage (25, 25a) ;
- déplacer la tête (26) de la troisième unité de perçage (25, 25c) dans une direction parallèle à l'axe d'extension (S) de l'outil (27) respectif vers la deuxième surface (E2) pour réaliser un lamage (F3) du deuxième trou (F2) faisant face au premier trou (F1).

12. Procédé selon l'une quelconque des revendications 9 à 11, dans lequel la trajectoire d'usinage (T) est perpendiculaire à un plan dans lequel repose la ligne d'extension de l'élément concave (E), la trajectoire d'usinage (T) étant de préférence circulaire.
